# EUROPEAN PATENT SPECIFICATION

(11) **EP 0 686 519 B1**
(45) Date of publication and mention of the grant of the patent: **10.03.1999**
(21) Application number: 95303555.7
(22) Date of filing: 25.05.1995
(51) Int. Cl.: B60J 1/20, E06B 9/262

(54) **Visor combination device of car window**
Sonnenschutzvorrichtung für Kraftfahrzeugfenster
Dispositif de pare-soleil pour fenêtre de voiture

(30) Priority: 31.05.1994 US 251378
(43) Date of publication of application: 13.12.1995
(73) Proprietor: FORMOSA SAINT JOSE CORPORATION, Taipei (TW)
(72) Inventor: Yang, Ming-Shun, Chia-Hsing St., Taipei (TW)
(74) Representative: Dallmeyer, Georg, Dipl.-Ing.

(56) References cited:
- FR-A- 2 646 205
- GB-A- 2 268 212
- US-A- 4 775 180
- US-A- 4 838 335

## Description

This invention relates to a window visor assembly, and in particular to a visor assembly for an automobile window.

When an automobile is left unattended for a period of time with its windows closed, particularly in summertime conditions, solar rays can penetrate into the interior of the car to heat the interior to an undesired extent. A person entering the car will then experience an uncomfortably hot feeling.

Another problem with unattended car is the possibility that a person can look into the car in search for loose items that can be stolen. Known visor units are described in US-A-4775180 and FR-A-2646205.

The present invention provides a visor unit for installation on a window, the unit comprising:-
a) a tubular frame having first and second ends;
b) a foldable curtain having first and second end edges, the first end edge being secured to the tubular frame, and the second end edge being provided with a handle for exerting a pulling force on the curtain;
c) a tension spring adapted to exert a pulling force so as to actuate the foldable curtain to open or to fold;
d) two openings in the tubular frame, a respective one of said openings being spaced from each end of the tubular frame;
e) a tractive tying line having two parallel runs extending from the second end edge of the curtain through the openings in the tubular frame, whereby a manual pulling force on the handle moves the foldable curtain to unfold or to close in opposition to the force of the tension spring (visor unit of the type disclosed in US-A-4 775 180); characterised by the provision of
f) anchorage means at the first end of the tubular frame, first and second pulleys being mounted within the tubular frame at the second end thereof, a pulley seat being disposed within the tubular frame, and third and fourth pulleys being mounted on the pulley seat, whereby the tension spring is trained between the anchorage means and the pulley seat to exert a force pulling the first and second pulleys away from the third and fourth pulleys; and
g) line anchorage means adjacent to the second end of the tubular frame, the tractive tying line further comprising line segments extending back and forth around the pulleys to the line anchorage means, whereby a manual pulling force on the handle moves the third and fourth pulleys towards the first and second pulleys in opposition to the force of the tension spring.

In a preferred embodiment, the visor assembly comprises two similarly-constructed visor units each as defined above.

Further embodiments of the invention are referred to in the dependent claims.

The invention will now be described in greater detail, by way of example, with reference to the drawings, in which:-
Fig. 1 is a perspective view of a pair of curtain assemblies constructed according to the present invention;
Fig. 2 is an exploded view of components of an assembly of Fig,. 1;
Fig. 3 is a part-sectional end elevation of a curtain assembly of the present invention in a folded state;
Fig. 4 is a part-sectional elevation of a curtain assembly of the of the present invention in an open state;
Fig. 5 is an exploded view of a frame mounting mechanism used in the present invention;
Fig. 6 is a sectional view taken through the mounting mechanism shown in Fig. 5;
Fig. 7 is a view similar to that of Fig. 6, but showing the mechanism in a different condition of adjustment;
Fig. 8 is a perspective view of a curtain assembly used on a window indoors; and
Fig. 9 is a perspective view of a mounting device used on the Fig. 8 curtain assembly.

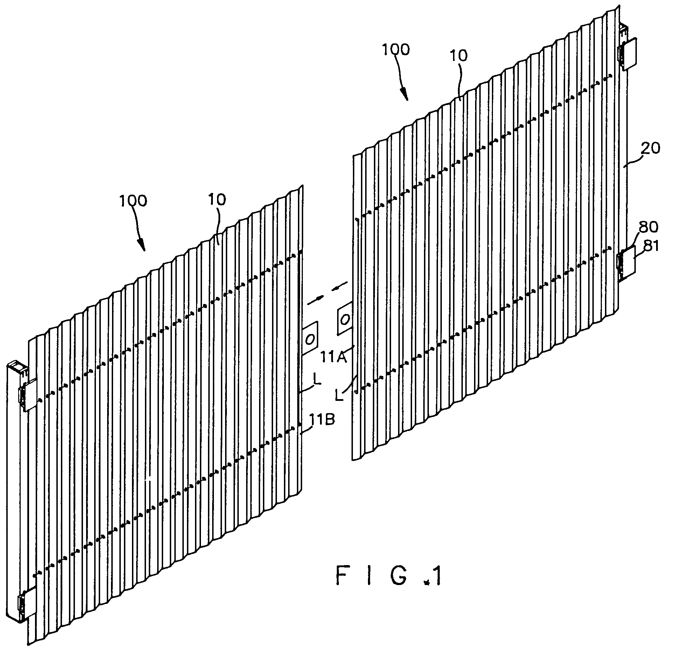

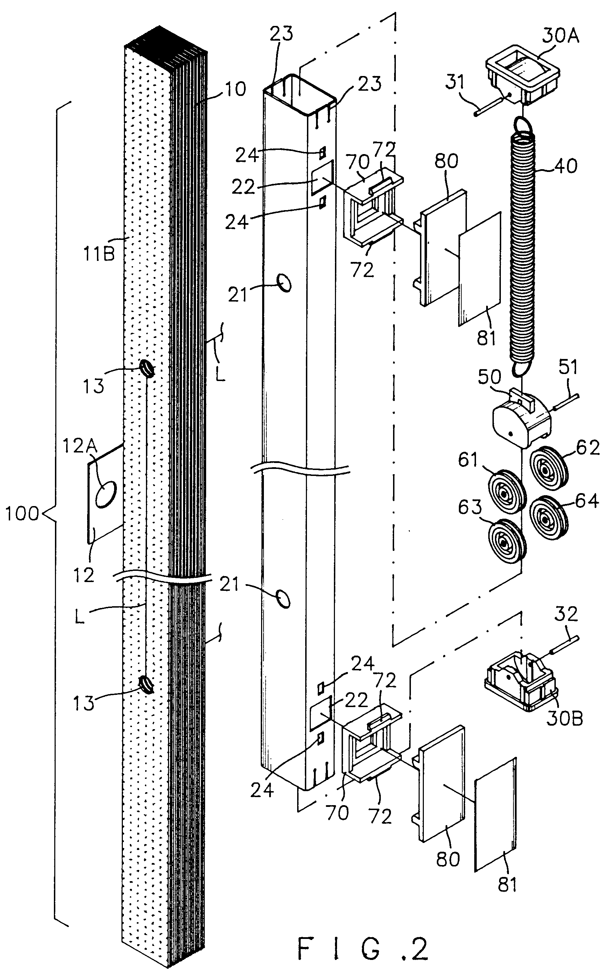

As shown in Figs. 1 and 2, there are two visor combinations or window curtains 100 constructed according to the present invention for installation on the front and rear windshields of a car for preventing sunshine and light from entering the car interior space. The visor combination device consists of two separate but symmetric visor devices 100 each one of which consists of a foldable visor curtain 10, a long tubular frame 20, and a tractive tying line L. One end of each foldable visor curtain 10 is fixed to its tubular frame 20, while the other end thereof is provided with a hook-and-loop fastener patch 11A or 11B for mutual adhesion of two visor devices 100 when the respective curtains are extended across the window. Each curtain has a pull handle 12 with a hole 12A designed for manually drawing the visor curtain across the window.

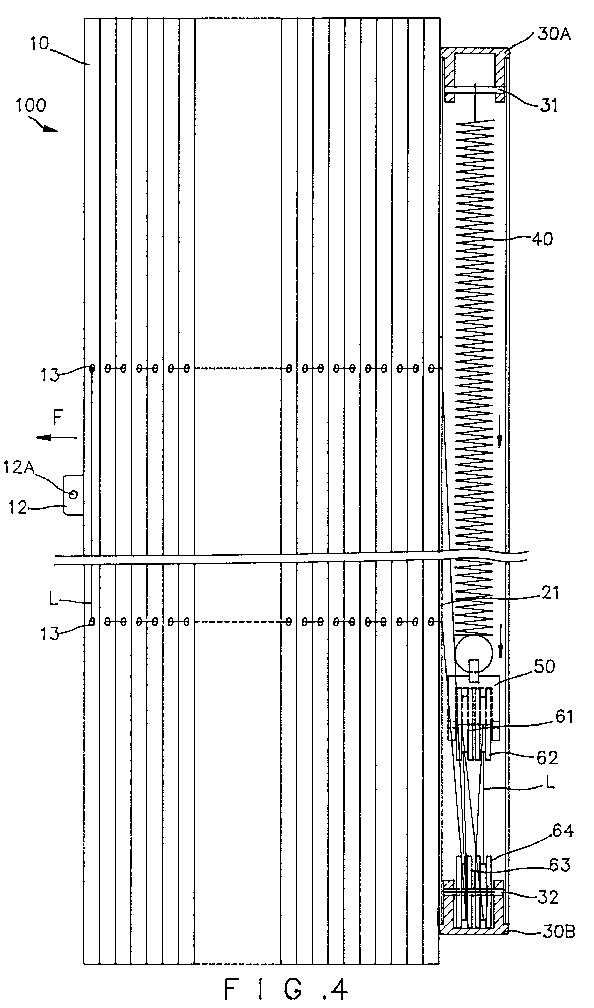

As shown in Fig. 2, each tubular frame 20 is a hollow tube having upper and lower ends and two through holes 21 spaced from the tube ends. As the two visor devices are the same, only one of them will be described in detail. The tubular frame 20 also has two sets of mounting holes 22 and 24 for attaching pads thereto. The holes 21 are aligned with holes 13 in each folding strip of the visor curtain 10 to form passages for the tractive tying line L. As shown in Fig. 4, the tractive tying line L includes two parallel runs passing through the aligned holes 13 in the foldable strips of the curtain 10.

Referring to Figs 2 to 4, the tubular frame 20 is provided with an upper cover 30A and a lower cover 30B . The upper cover 30A comprises a rod 31 that forms an anchorage for one end of a tension sprint 40. The other end of the spring 40 is anchored on a pulley seat 50. Two pulleys 61 and 62 are rotatably mounted on a pin 51 in the pulley seat 50.

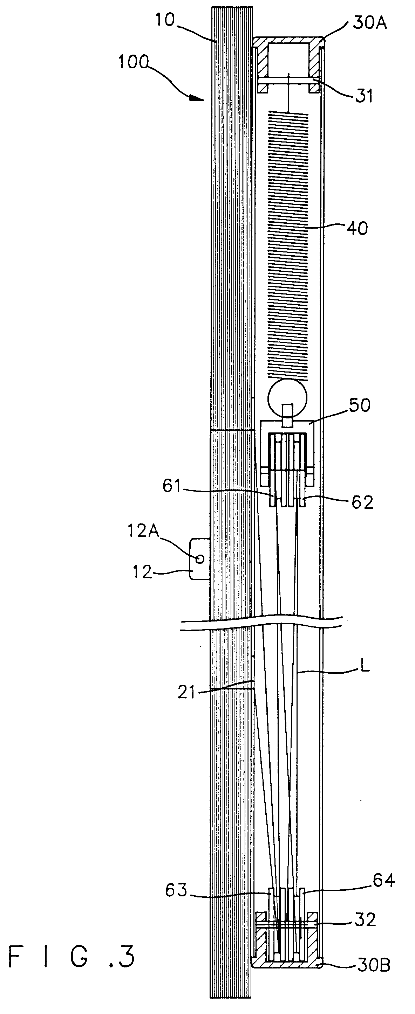

The lower cover 30B carries a pin 32 that rotatably mounts two pulleys 63, 64. The tractive tying line L runs back and forth around the four pulleys so as to actuate the foldable visor curtain 10 between the extended position (Fig. 4) and the folded condition (Fig. 3).

As shown in Figs. 2, 5 and 6, the tubular frame is provided with mounting pads 70 and 80 near its upper and lower ends. Each pad 70 is provided with a hook structure 71 and two oppositely-facing lugs 72. Each pad 80 is provided with flanges 82 and 83 which define two facing grooves or pockets 84, 85 containing the lugs 72. A flat outer surface of each pad 80 is provided with a double-face glue-spreading adhesive tape 81 through which the visor device can be adhered to the windshield glass of car (not shown).

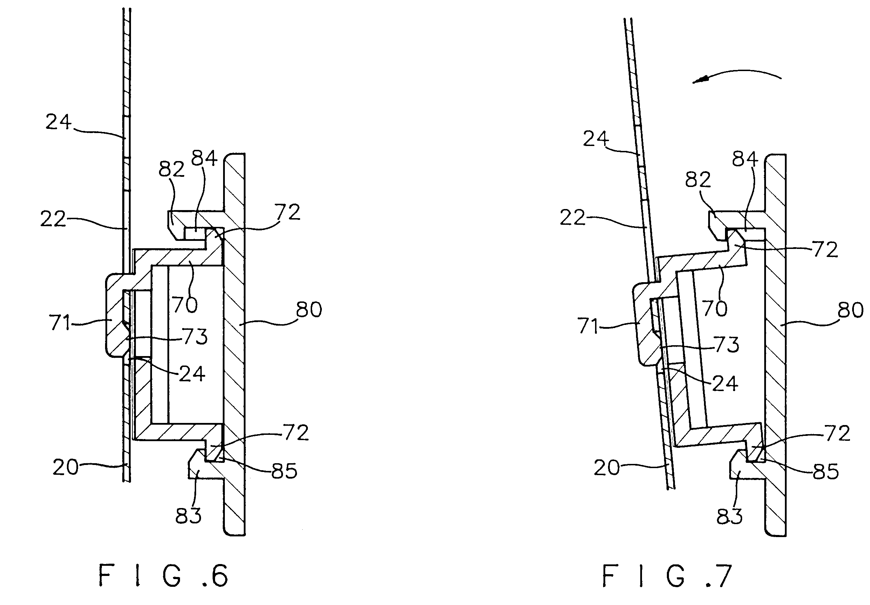

As shown in Figs 6 and 7, each groove 84 is wider than the associated groove (pocket) 85, such that the pad 70 can pilot relative to the pad 80, whereby the pad 80 can conform to a range of different window curvatures.

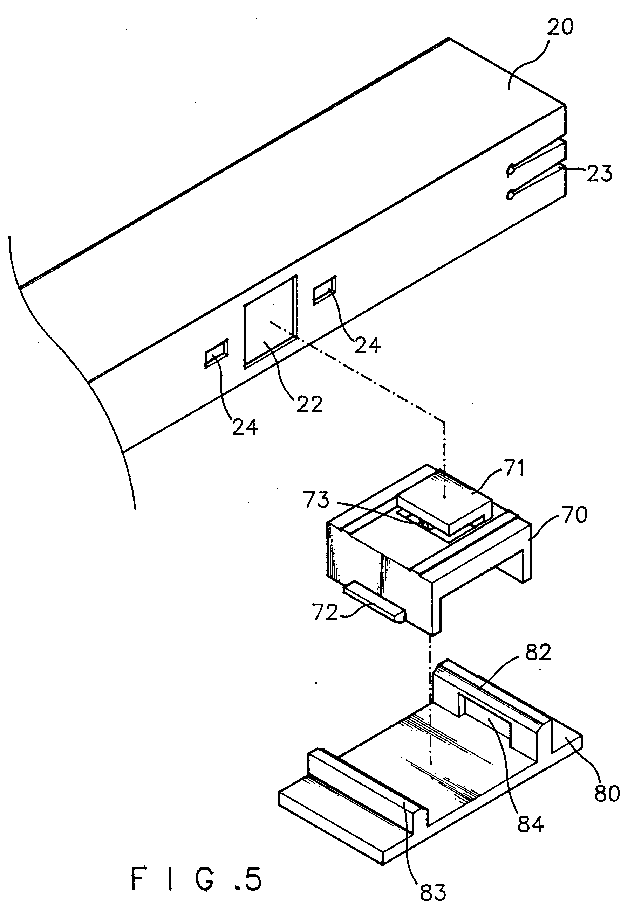

As shown in Figs. 5, 6 and 7, the pad 70 can be assembled to the tubular frame 20 by inserting the hook structure 71 into the hole 22 so that a protuberance 73 defined by the hook structure enters into a detent hole 24 located alongside the hole 22. Each pad 80 is pivotably adjustably connected to the associated pad 70, via the lugs 72 and the pockets 84, 85, whereby the pad assembly can be used to mount the tubular frame on a curved windshield of an automobile.

As shown in Figs. 2 and 3, when the visor device 100 of the present invention is folded, the tractive tying line L extends through the holes 13 in each folding strip of the visor curtain 10 and the through the holes 21 in the tubular frame 20. Within the tubular frame 20, the tractive tying line L is integrated into a single ply to wind sequentially around the pulleys 63, 61, 64 and 62; finally the ends of the tractive tying line L are fixed in the grooves 23 of the tubular frame (see Fig. 2).

As shown in Fig 3, when the visor curtain 10 is folded, the tension spring 40 in the tubular frame is not subject to the tractive action of external force, but is in a retracted state. However, as shown in Fig. 4, when the visor curtain 10 is to be extended, a manual force F is applied to the pull handle 12 to extend the visor curtain; the tractive tying line L is pulled out from the tubular frame tube 20 so as to draw the tension spring 40 and the pulleys 61, 62 on the pulley seat 50 downwardly, thereby to let the visor curtain extend away from the tubular frame.

The present invention consists of two symmetric similarly-constructed visor devices 100, so that, when the two curtains 10 are extended, the hook-and-the-loop patches 11A and 11B can be fixed together to hold the two curtains in extended (open) positions. The visor devices 100 can be used on the front and rear windshield glass of a car to prevent sunshine being transmitted into the car, especially when the car is left unattended.

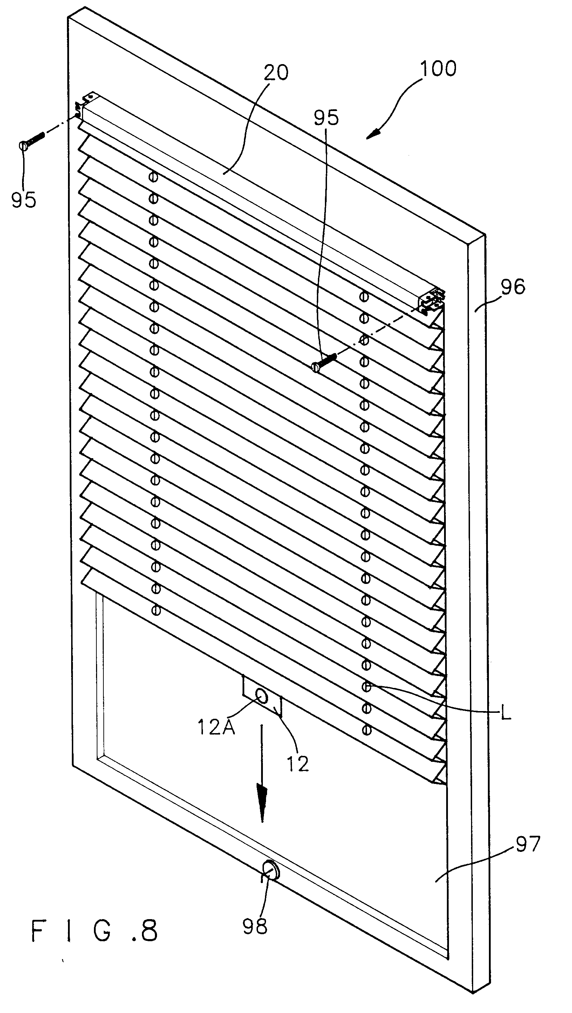

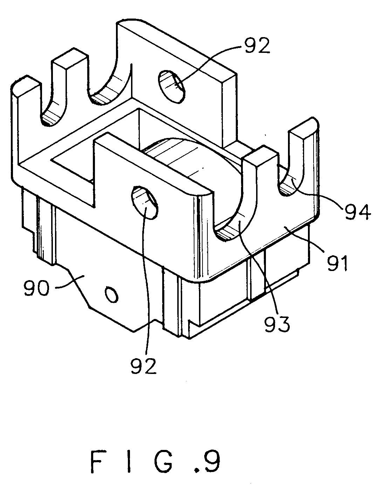

Fig. 8 shows a single curtain assembly installed on an indoor window 97 of a building. In such an installation, it is not necessary to provide mounting pads 70 and 80 for the tubular frame 20. Instead, covers 91 can be provided at the ends of the tubular frame 20, and these covers are provided with mounting holes or notches. Thus, as shown in Fig.9, a tube end cover 91 has threaded holes 92, and notches 93 and 94 for receiving screws 95 (see Fig. 8), whereby the tubular frame 20 can be mounted on an aluminium frame 96 of a building window 97. Alternatively, a hook-and-loop fastener with a hook side (or a loop side) can be adhered to the back of the tubular frame 20, and a hook-and-loop fastener with a corresponding loop side (or hook side) can be adhered to the aluminum window frame 96, in order to mount the tubular frame 20 on the window frame 96.

When the visor device 100 is used as the visor of the indoor window 97, the hook hole 12A of the pull handle 12 can be engaged on a nail 98 on the frame 96, to hold the curtain 10 in its extended position. The mechanism for retracting the curtain 10 to its folded (closed) position can be the same as shown and described for the car window curtain assembly.

## Claims

1. A visor unit for installation on a window, the unit comprising:-
a) a tubular frame (20) having first and second ends;
b) a foldable curtain (10) having first and second end edges, the first end edge being secured to the tubular frame, and the second end edge being provided with a handle (12) for exerting a pulling force on the curtain;
c) a tension spring (40) adapted to exert a pulling force so as to actuate the foldable curtain to open or to fold;
d) two openings (21) in the tubular frame, a respective one of said openings being spaced from each end of the tubular frame;
e) a tractive tying line (L) having two parallel runs extending from the second end edge of the curtain through the openings in the tubular frame, whereby a manual pulling force on the handle moves the foldable curtain to unfold or to close in opposition to the force of the tension spring; characterised by the provision of
f) anchorage means (31) at the first end of the tubular frame, first and second pulleys (63, 64) being mounted within the tubular frame at the second end thereof, a pulley seat (50) being disposed within the tubular frame, and third and fourth pulleys (61, 62) being mounted on the pulley seat, whereby the tension spring is trained between the anchorage means and the pulley seat to exert a force pulling the first and second pulleys away from the third and fourth pulleys; and
g) line anchorage means (32) adjacent to the second end of the tubular frame, the tractive tying line further comprising line segments extending back and forth around the pulleys to the line anchorage means, whereby a manual pulling force on the handle moves the third and fourth pulleys towards the first and second pulleys in opposition to the force of the tension spring.

2. A visor assembly comprising two similarly-constructed visor units, each of which is as is claimed in claim 1.

3. A visor assembly as claimed in claim 2, wherein the visor units are adapted for positioning on an automobile window with the tubular frames of the respective units located at the side edges of the window, so that the handles (12) on the respective units can be drawn together to pull the respective curtains (10) across the window.

4. A visor assembly as claimed in claim 1 or claim 2, further comprising means for mounting the/or each tubular frame (20) on a window, the/or each mounting means comprising a pad assembly at each end of the respective tubular frame, each pad assembly comprising a first pad (70) secured to said frame, and a second pad (80) pivotally attached to the first pad, the second pad having a flat face for presentation to the surface of the window, whereby the pad assembly can be secured to the window.

5. A visor assembly as claimed in claim 4, wherein the/or each first pad comprises two oppositely-extending lugs (72), and the/or each second pad comprises two facing pockets (84, 85) receiving therein the respective lugs, one of said pockets being wider than the other pocket, so that the lug in said one pocket can move back and forth to provide a pivotable adjustment of the second pad relative to the first pad.

## Patentansprüche

1. Sonnenblendeneinheit zur Anbringung an einem Fenster, wobei die Einheit aufweist:
a) einen rohrförmigen Rahmen(20) mit einem ersten und einem zweiten Ende;
b) einem faltbaren Vorhang (10) mit einem ersten und einem zweiten Endrand, wobei der erste Endrand an dem rohrförmigen Rahmen angebracht ist und der zweite Endrand mit einem Griff (12) zum Aufbringen einer Zugkraft aufden Vorhang versehen ist;
c) einer Zugfeder (40), die zum Aufbringen einer Zugkraft Öffnen oder Schließen des faltbaren Vorhangs ausgebildet ist;
d) zwei Öffnungen (21) im rohrförmigen Rahmen, wobei jeweils eine der Öffnungen mit Abstand zu einem der Enden des rohrförmigen Rahmens angeordnet ist;
e) einem Zug-Bindeseil (L) mit zwei parallelen Erstreckungen, die sich von dem zweiten Endrand des Vorhangs durch die Öffnungen des rohrförmigen Rahmens erstreckt, wodurch die am Griff aufgebrachte Zugkraft den faltbaren Vorhang zum Entfalten oder Schließen entgegen der Wirkung der Zugfeder bewegt,
gekennzeichnet durch
f) eine Verankerungseinrichtung (31) am ersten Ende des rohrförmigen Rahmens, wobei eine erste und eine zweite Seilscheibe (53, 64) in dem rohrförmigen Rahmen an dessen zweitem Ende angebracht sind, ein Seilscheibensitz (50) in dem rohrförmigen Rahmen vorgesehen ist, und eine dritte und eine vierte Seilscheibe (61, 62) auf dem Seilscheibensitz angebracht sind, wobei die Zugfeder zwischen der Verankerungseinrichtung und dem Seilscheibensitz gespannt ist, um eine Kraft aufzubringen, welche die erste und die zweite Seilscheibe von der dritten und der vierten Seilscheibe wegzieht; und
g) eine dem zweiten Ende des rohförmigen Rahmens benachbarte Seilverankerungseinrichtung (32), wobei das Zug-Bindeseil ferner Seilabschnitte aufweist, die sich um die Seilscheiben herum zu der Seilverankerungseinrichtung erstrecken, wodurch eine auf den Griff aufgebrachte manuelle Zugkraft die dritte und die vierte Seilscheibe entgegen der Kraft der Zugfeder in Richtung auf die erste und die zweite Seilseheibe zieht.

2. Sonnenblendenanordnung mit zwei gleichartig aufgebauten Sonnenblendeneinheiten, von denen jede gemäß Anspruch 1 ausgebildet ist.

3. Sonnenblendenanordnung nach Anspruch 2, bei der die Sonnenblendeneinheiten zur Positionierung an einem Automobilfenster geeignet sind, wobei die rohrförmigen Rahmen der jeweiligen Einheiten an den Seitenrändern des Fensters angeordnet werden, so daß an den Griffen (12) der jeweiligen Einheiten zum Ziehen der jeweiligen Vorhänge über das Fenster gezogen werden kann.

4. Sonnenblendenanordnung nach Anspruch 1 oder Anspruch 2, ferner mit einer Einrichtung zum Anbringen des oder jedes rohrförmigen Rahmens (20) an einem Fenster, wobei die oder jede Befestigungseinrichtung eine Anschlußeinrichtung an jedem Ende des jeweiligen rohrförmigen Rahmens aufweist, wobei jede Anschlußeinrichtung ein an dem Rahmen angebrachtes erstes Zwischenteil (70) und ein schwenkbar an dem ersten Zwischenteil (70) angebrachtes zweites Zwischenteil (80) aufweist, wobei das zweite Zwischenteil eine der Oberfläche des Fensters zugewandte ebene Seite aufweist, wodurch die Anschlußeinrichtung an dem Fenster angebracht werden kann.

5. Sonnenblendenanordnung nach Anspruch 4, bei der das oder jedes erste Zwischenteil zwei sich entgegengesetzt erstreckende Ansätze (72) und das oder jedes zweite Zwischenteil zwei einander zugewandte Taschen (84, 85) aufweist, welche die jeweiligen Ansätze aufnehmen, wobei eine der Taschen breiter als die andere Tasche ist, so daß der Ansatz sich in dieser einen Tasche hin und her bewegen kann, um eine Verstellung des zweiten Zwischenteile in bezug zum ersten Zwischenteil durch Verschwenken zu ermöglichen.

## Revendications

1. Unité de pare-soleil prévue pour être installée sur une fenêtre, l'unité comprenant :
a) une armature tubulaire (20) comportant une première et une seconde extrémité ;
b) un rideau pliable (10) comportant un premier et un second bord d'extrémité, le premier bord d'extrémité étant fixé à l'armature tubulaire, et le second bord d'extrémité étant muni d'une poignée (12) pour exercer une force de traction sur le rideau ;
c) un ressort de tension (40) adapté pour exercer une force de traction de façon à actionner le rideau pliable pour l'ouverture ou le repliement;
d) deux ouvertures (21) ménagées dans l'armature tubulaire, une ouverture respective desdites ouvertures étant espacée de chaque extrémité de l'armature tubulaire ;
e) un fil d'attache de traction (L) comportant deux chemins parallèles s'étendant depuis le second bord d'extrémité du rideau dans les ouvertures ménagées dans l'armature tubulaire, grâce à quoi une force de traction manuelle exercée sur la poignée déplace le rideau pliable pour le déplier ou le fermer en opposition à la force exercée par le ressort de tension ; caractérisée en ce que sont prévus
f) des moyens d'ancrage (31) à la première extrémité de l'armature tubulaire, une première et une deuxième poulie (63, 64) étant montées à l'intérieur de l'armature tubulaire à sa seconde extrémité, un siège de poulie (50) étant disposé à l'intérieur de l'armature tubulaire, et une troisième et une quatrième poulie (61, 62) étant montées sur le siège de poulie, grâce à quoi le ressort de tension est entraîné entre les moyens d'ancrage et le siège de poulie pour exercer une force de traction écartant les première et deuxième poulies des troisième et quatrième poulies ; et
g) des moyens d'ancrage de fil (32) adjacents à la seconde extrémité de l'armature tubulaire, le fil d'attache de traction comprenant en outre des segments de fil s'étendant en arrière et en avant autour des poulies jusqu'aux moyens d'ancrage de fil, grâce à quoi une force de traction manuelle exercée sur la poignée déplace les troisième et quatrième poulies en direction des première et deuxième poulies en opposition à la force exercée par le ressort de tension.

2. Assemblage de pare-soleil comprenant deux unités de pare-soleil de construction similaire, chacune des unités étant telle que revendiquée dans la revendication 1.

3. Assemblage de pare-soleil selon la revendication 2, dans lequel les unités de pare-soleil sont adaptées pour être placées sur une fenêtre d'automobile avec les armatures tubulaires des unités respectives placées à côté des bords latéraux de la fenêtre, de telle sorte que les poignées (12) sur les unités respectives peuvent être tirées ensemble pour tirer les rideaux respectifs (10) en travers de la fenêtre.

4. Assemblage de pare-soleil selon la revendication 1 ou la revendication 2, comprenant en outre des moyens pour monter l'armature tubulaire (20) ou chaque armature tubulaire (20) sur une fenêtre, le ou chaque moyen de montage comprenant un assemblage de patin à chaque extrémité de l'armature tubulaire respective, chaque assemblage de patin comprenant un premier patin (70) fixé audit cadre et un second patin (80) fixé, de façon à pouvoir pivoter, au premier patin, le second patin ayant une face plate pour la présentation à la surface de la fenêtre, grâce à quoi l'assemblage de patin peut être fixé à la fenêtre.

5. Assemblage de pare-soleil selon la revendication 4, dans lequel le ou chaque premier patin comprend deux pattes (72) s'étendant de façon opposée, et le ou chaque second patin comprend deux poches se faisant face (84, 85) recevant à l'intérieur les pattes respectives , une desdites poches étant plus large que l'autre poche, de telle sorte que la patte dans ladite première poche peut se déplacer suivant un mouvement de va-et-vient pour fournir un réglage pivotant du second patin par rapport au premier patin.
